# EUROPÄISCHE PATENTSCHRIFT

(11) **EP 1 974 597 B1**
(45) Veröffentlichungstag und Bekanntmachung des Hinweises auf die Patenterteilung: **06.01.2010**
(21) Anmeldenummer: 08004768.1
(22) Anmeldetag: 14.03.2008
(51) Int. Cl.: A01D 34/90

(54) **Schaftsystem für ein tragbares, handgeführtes Arbeitsgerät und tragbares, handgeführtes Arbeitsgerät**
Shaft system for a portable, handheld work tool and portable, handheld work tool
Système d'axe pour un appareil de travail portatif manuel et appareil de travail portatif manuel

(30) Priorität: 31.03.2007 DE 102007015680
(43) Veröffentlichungstag der Anmeldung: 01.10.2008
(73) Patentinhaber: Andreas Stihl AG & Co. KG, 71336 Waiblingen (DE)
(72) Erfinder: Heinzelmann, Georg, 71522 Backnang (DE)
(74) Vertreter: Wasmuth, Rolf

(56) Entgegenhaltungen:
- WO-A-2006/019889
- DE-A1- 19 618 025
- DE-A1- 19 910 793
- DE-A1- 19 917 238

## Beschreibung

Die Erfindung betrifft ein Schaftsystem für ein tragbares, handgeführtes Arbeitsgerät und ein tragbares, handgeführtes Arbeitsgerät nach dem Obergriff des Anspruchs 9 (siehe z.B. DE 199 10 793 A1).

Aus der DE 103 25 493 A1 ist ein Rohr für einen Trimmer oder eine Auslichtsäge bekannt, an dessen einem Ende der Motor und an dem anderen Ende das Arbeitswerkzeug angeordnet sind. In dem Rohr ist ein Lager angeordnet, das sich mit Rippen an dem äußeren Rohr abstützt. In dem Lager ist die Antriebswelle gelagert. Das Rohr kann aus einem Faserverbundwerkstoff gefertigt sein.

Ein Rohr aus einem Faserverbundwerkstoff kann bereits bei vergleichsweise geringen Verformungen abknicken und wird dadurch zerstört. Der Vorteil eines Rohrs aus Faserverbundwerkstoff ist das vergleichsweise geringe Gewicht dieses Werkstoffs. Um eine ausreichende Knicksteifigkeit zu erreichen, muss die Wandstärke des Rohrs jedoch vergleichsweise groß ausgeführt werden, so dass die Gewichtsersparnis gegenüber einem herkömmlichen Rohr aus Metall, beispielsweise Aluminium, sich verringert oder entfällt.

Der Erfindung liegt die Aufgabe zugrunde, ein Schaftsystem für ein tragbares, handgeführtes Arbeitsgerät anzugeben, das ein geringes Gewicht und eine hohe Stabilität aufweist. Eine weitere Aufgabe der Erfindung ist es, ein tragbares, handgeführtes Arbeitsgerät mit geringem Gewicht anzugeben, dessen Schaft eine hohe Stabilität aufweist.

Diese Aufgabe wird bezüglich des Schaftsystems durch ein Schaftsystem mit den Merkmalen des Anspruchs 1 gelöst. Bezüglich des Arbeitsgeräts wird die Aufgabe durch ein Arbeitsgerät mit den Merkmalen des Anspruchs 9 gelöst.

Es ist vorgesehen, dass als Faserverbundwerkstoff kohlefaserverstärkter Kunststoff zum Einsatz kommt. Kohlefaserverstärkter Kunststoff besitzt ein geringes Gewicht und kann als Rohr mit konstantem Durchmesser und konstanter Wandstärke auf einfache Weise in einem Pultrusionsverfahren hergestellt werden. Der geringe erste Abstand bewirkt, dass sich das Führungsrohr bei einer Biegung an das Stützlager anlegt und so von innen abgestützt wird. Dadurch kann vermieden werden, dass das Führungsrohr zu stark gebogen wird. Das Stützlager ist in seinem Inneren von der Antriebswelle gestützt. Der aus Führungsrohr, Stützlager und Antriebswelle aufgebaute Schaft besitzt aufgrund der Abstützung des Führungsrohrs durch die innenliegenden Bauteile eine hohe Steifigkeit und Stabilität. Das Führungsrohr kann mit vergleichsweise geringer Wandstärke ausgeführt werden. Der Schaft ist dabei so ausgelegt und bemessen, dass sich der Führungsrohrabschnitt an das Stützlager anlegt und an dem Stützlager abstützt, bevor die zulässige Durchbiegung des Führungsrohrabschnitts überschritten wird und eine bleibende Verformung oder Zerstörung des Führungsrohrs eintritt. Um ein geringes Gewicht des Schaftsystems zu erreichen, soll der erste Abstand bis etwa 15% des Innendurchmessers des Führungsrohrabschnitts betragen. Das Schaftsystem ist vorteilhaft eine Schaftverlängerung.

Vorteilhaft beträgt der erste Abstand bis etwa 10% des Innendurchmessers des Führungsrohrabschnitts. Zweckmäßig beträgt der erste Abstand mindestens 5% des Innendurchmessers des Führungsabschnitts.

Um eine gute Lagerung der Antriebswelle zu erreichen, ist vorgesehen, dass das Stützlager sich an dem Führungsrohrabschnitt über mindestens ein Stützelement abstützt. Der Bereich, in dem der erste Abstand besteht, liegt dabei insbesondere zwischen zwei Stützelementen des Stützlagers. Vorteilhaft sind mehrere Stützelemente vorgesehen, die so am Umfang des Stützlagers angeordnet sind, dass gegenüberliegend zu jedem zwischen zwei Stützelementen liegenden Bereich, also an der gegenüberliegenden Seite des Umfangs, ein Stützelement angeordnet ist. Dadurch ist sichergestellt, dass sich nicht zwei Bereiche, in denen der erste Abstand zwischen Führungsrohr und Stützlager besteht, gegenüberliegen können. Das Führungsrohr liegt dadurch bei einer Durchbiegung an einem Stützelement und einem gegenüberliegenden Bereich, in dem ein Abstand zwischen Führungsrohr und Stützlager gegeben ist, an.

Es ist vorgesehen, dass zwischen einem Stützelement und dem Führungsrohrabschnitt ein zweiter Abstand von etwa 0,2% bis etwa 2% des Innenumfangs des Führungsrohrabschnitts gebildet ist. Aufgrund des geringen Abstands zwischen Stützelement und Führungsrohrabschnitt wird die Stabilität des Führungsrohrs weiter erhöht. Vorteilhaft besitzt das Stützlager einen zylindrischen Grundkörper, von dessen Außenumfang sich mindestens ein Stützelement nach außen erstreckt, wobei in dem Grundkörper der Antriebswellenabschnitt gelagert ist. Es ist vorgesehen, dass zwischen dem Außenumfang des Antriebswellenabschnitts und dem Grundkörper des Stützlagers ein dritter Abstand gebildet ist, der etwa 0,5% bis etwa 4% des Innendurchmessers des Führungsrohrabschnitts beträgt. Dadurch, dass der Abstand etwa 0,5% oder mehr des Innendurchmessers des Führungsrohrabschnitts beträgt, ist eine reibungsarme Schmierung und Lagerung des Antriebswellenabschnitts gewährleistet. Der vergleichsweise geringe Abstand stellt sicher, dass sich bei einer Verformung des Schafts das Führungsrohr über das Stützlager an der Antriebswelle abstützt. Dadurch erhöht der Antriebswellenabschnitt die Stabilität des Führungsrohrabschnitts.

Der erste, der zweite und der dritte Abstand werden in radialer Richtung und in mittiger Lage der Elemente zueinander gemessen. Die angegebenen Abstände betragen damit die Hälfte der Differenz der jeweiligen Durchmesser der entsprechenden Bauteile.

Vorteilhaft erstreckt sich das Stützlager über die gesamte Länge des Führungsrohrabschnitts zwischen der oberen Anschlusseinheit und der unteren Anschlusseinheit. Dadurch kann die Lage des Antriebswellenabschnitts in dem Führungsrohrabschnitt auf einfache Weise festgelegt werden.

Um auf einfache Weise eine Verbindung des Schaftsystems mit angrenzenden Schaftabschnitten zu ermöglichen, ist vorgesehen, dass der Antriebswellenabschnitt an mindestens einem Ende drehfest mit einem Anschlussstück verbunden ist. Das Anschlussstück kann dabei eine Aufnahme für ein Koppelelement besitzen oder direkt eine Kopplung zu einem angrenzenden Anschlussstück herstellen. Es ist vorgesehen, dass der Antriebswellenabschnitt ein Innenprofil aufweist, das in ein Außenprofil des Anschlussstücks greift. Dadurch kann auf einfache Weise eine sichere und drehfeste Verbindung zwischen dem Antriebswellenabschnitt und dem Anschlussstück erreicht werden.

Vorteilhaft weist das Anschlussstück in einem in den Antriebswellenabschnitt eingesteckten Bereich einen ersten Außendurchmesser und einen zweiten Außendurchmesser auf, wobei der erste Außendurchmesser größer als ein zugeordneter erster Innendurchmesser des Antriebswellenabschnitts vor dem Einstecken des Anschlussstücks ist und der zweite Außendurchmesser kleiner als ein zugeordneter zweiter Innendurchmesser des Antriebswellenabschnitts vor dem Einstecken des Anschlussstücks ist. Dadurch, dass das Anschlussstück in einem Bereich einen größeren und in einem anderen Bereich einen kleineren Außendurchmesser aufweist als der Antriebswellenabschnitt, wird erreicht, dass das Anschlussstück den Antriebswellenabschnitt beim Einpressen des Anschlussstücks in den Antriebswellenabschnitt verformt. So kann auf einfache Weise eine feste Verbindung zwischen dem Anschlussstück und dem Antriebswellenabschnitt erreicht werden. Dadurch, dass der zweite Außendurchmesser des Anschlussstücks kleiner als der zugeordnete zweite Innendurchmesser des Antriebswellenabschnitts ist, wird der Antriebswellenabschnitt verformt, ohne dass ein Aufweiten über den gesamten Umfang notwendig ist. Dadurch wird die zum Einpressen des Anschlussstücks benötigte Kraft verringert. Unterschiedliche Durchmesser in unterschiedlichen Bereichen können bei profiliertem Anschlussstück und profiliertem Antriebswellenabschnitt vorgesehen sein, die unterschiedlichen Durchmesser können jedoch auch bei nicht-profilierten Oberflächen vorgesehen sein. Es kann auch vorgesehen sein, dass nur das Anschlussstück oder nur der Antriebswellenabschnitt ein Profil aufweist. Auch unterschiedliche Außenkonturen können vorgesehen sein. Beispielsweise kann das Anschlussstück einen ovalen Querschnitt aufweisen und der Antriebswellenabschnitt einen runden Querschnitt. Die beiden Bereiche mit dem ersten und zweiten Außendurchmesser liegen vorteilhaft in einem Querschnitt.

Um die Stabilität des Schaftsystems in seinen Endbereichen zu erhöhen, ist vorgesehen, dass benachbart zu mindestens einer Anschlusseinheit eine den Führungsrohrabschnitt umgebende Verstärkungshülse angeordnet ist. Es ist vorgesehen, dass der Führungsrohrabschnitt und der Antriebswellenabschnitt jeweils als einteiliges Rohr ausgebildet sind und sich von der unteren bis zur oberen Anschlusseinheit erstrecken. Dadurch, dass der Führungsrohrabschnitt sich über die gesamte Länge des Schaftsystems zwischen der oberen und der unteren Anschlusseinheit erstreckt, ergibt sich eine große Länge des Führungsrohrabschnitts. Aufgrund der großen Länge des Führungsrohrabschnitts ist eine Abstützung an dem Stützlager bei Verformung vorteilhaft. Aufgrund der vergleichsweise großen Länge des Führungsrohrabschnitts kann das Führungsrohr eines handgeführten Arbeitsgeräts aus wenigen Teilabschnitten aufgebaut werden. Vorteilhaft wird für übliche Arbeitshöhen nur ein Schaftsystem, das vorteilhaft als Schaftverlängerung ausgebildet ist, benötigt.

Für ein tragbares, handgeführtes Arbeitsgerät mit einem Gehäuse, in dem ein Antriebsmotor angeordnet ist, und mit mindestens einem von dem Antriebsmotor angetriebenen Werkzeug, wobei das Arbeitsgerät einen Schaft besitzt, an dessen einem Ende das Gehäuse und an dessen gegenüberliegendem Ende das Werkzeug angeordnet ist, wobei der Schaft ein Führungsrohr und eine Antriebswelle umfasst und wobei die Antriebswelle durch das Führungsrohr geführt und in dem Führungsrohr über mindestens ein Stützlager abgestützt ist, ist vorgesehen, dass mindestens ein Führungsrohrabschnitt aus kohlefaserverstärktem Kunststoff besteht, und dass zwischen dem Stützlager und dem Führungsrohrabschnitt in mindestens einem Bereich des Umfangs des Stützlagers ein erster Abstand gebildet ist, der bis etwa 15% des Innendurchmessers des Führungsrohrabschnitts beträgt.

Aufgrund des geringen Abstands zwischen Stützlager und Führungsrohrabschnitt wird erreicht, dass sich der Führungsrohrabschnitt bei Verformung an das Stützlager anlegt und so von dem Stützlager abgestützt wird. Das Führungsrohr kann dadurch mit geringer Wandstärke bei hoher Stabilität ausgeführt werden, so dass sich ein geringes Gewicht des Arbeitsgeräts ergibt.

Vorteilhaft beträgt der erste Abstand bis etwa 10% des Innendurchmessers des Führungsrohrabschnitts. Insbesondere beträgt der erste Abstand mindestens 5% des Innendurchmessers des Führungsrohrabschnitts. Das Führungsrohr, also bei einem einteiligen Führungsrohr das gesamte Führungsrohr und bei einem mehrteilig ausgebildeten Führungsrohr die einzelnen Führungsrohrabschnitte, besteht vorteilhaft vollständig aus kohlefaserverstärktem Kunststoff. Vorteilhaft bestehen die einzelnen Führungsrohrabschnitte eines mehrteiligen Führungsrohrs aus abgelängtem Stangenmaterial. Alle Führungsrohrabschnitte weisen dadurch vorteilhaft den gleichen Außendurchmesser und Innendurchmesser sowie die gleiche Wandstärke auf.

Vorteilhaft stützt sich das Stützlager an dem Führungsrohr über mindestens ein Stützelement ab. Zweckmäßig liegt der Bereich, in dem der erste Abstand besteht, zwischen zwei Stützelementen des Stützlagers. Insbesondere sind mehrere Stützelemente vorgesehen, die so am Umfang des Stützlagers angeordnet sind, dass gegenüberliegend zu jedem zwischen zwei Stützelementen liegenden Bereich ein Stützelement angeordnet ist. Zwischen dem Stützelement und dem Führungsrohr ist vorteilhaft ein zweiter Abstand von etwa 0,2% bis etwa 2% des Innenumfangs das Führungsrohr gebildet.

Es ist vorgesehen, dass das Stützlager einen zylindrischen Grundkörper besitzt, von dessen Außenumfang sich mindestens ein Stützelement nach außen erstreckt, wobei in dem Grundkörper die Antriebswelle gelagert ist. Vorteilhaft ist zwischen dem Außenumfang der Antriebswelle und dem Grundkörper des Stützlagers ein dritter Abstand gebildet, der etwa 0,5% bis etwa 4% des Innendurchmessers des Führungsrohrs beträgt.

Es ist vorgesehen, dass die Antriebswelle mehrteilig ausgebildet ist. Dadurch wird ein einfacher Transport des Arbeitsgeräts ermöglicht. Vorteilhaft ist zur Verbindung der Antriebswellenabschnitte mindestens ein Anschlussstück vorgesehen, das mit einem Antriebswellenabschnitt drehfest verbunden ist. Vorteilhaft weist der Antriebswellenabschnitt ein Innenprofil auf, das in ein Außenprofil des Anschlussstücks greift. Das Anschlussstück weist vorteilhaft in einem in den Antriebswellenabschnitt eingesteckten Bereich einen ersten Außendurchmesser und einen zweiten Außendurchmesser auf, wobei der erste Außendurchmesser größer ist als ein zugeordneter erster Innendurchmesser des Antriebswellenabschnitts vor dem Einstecken des Anschlussstücks und der zweite Außendurchmesser kleiner ist als ein zugeordneter zweiter Innendurchmesser des Antriebswellenabschnitts vor dem Einstecken des Anschlussstücks.

Insbesondere besitzt das Arbeitsgerät ein Schaftsystem, das vorteilhaft eine Schaftverlängerung ist. Auch mehrere Schaftverlängerungen können vorgesehen sein. Dadurch kann die Länge des Schafts des Arbeitsgeräts dem jeweiligen Einsatzzweck angepasst werden. Das Schaftsystem, insbesondere die Schaftverlängerung besitzt aufgrund der Ausbildung des Führungsrohrs aus kohlefaserverstärktem Kunststoff ein geringes Gewicht und aufgrund des geringen Abstands zwischen Führungsrohr und Stützlager eine hohe Stabilität.

Ein Ausführungsbeispiel der Erfindung wird im Folgenden anhand der Zeichnung erläutert. Es zeigen:
- Fig. 1: eine perspektivische Darstellung eines Arbeitsgeräts,
- Fig. 2: die Schaftverlängerung des Arbeitsgeräts aus Fig. 1 in Seitenansicht,
- Fig. 3: einen Schnitt entlang der Linie III-III in Fig. 2,
- Fig. 4: das werkzeugseitige Ende der Schaftverlängerung in Explosionsdarstellung,
- Fig. 5: den Ausschnitt V aus Fig. 3 in vergrößerter Darstellung,
- Fig. 6: das motorseitige Ende der Schaftverlängerung in vergrößerter Schnittdarstellung,
- Fig. 7: das werkzeugseitige Ende der Schaftverlängerung in vergrößerter Schnittdarstellung,
- Fig. 8: einen Schnitt entlang der Linie VIII-VIII in Fig. 2,
- Fig. 9: eine schematische Darstellung des Führungsrohrs des Arbeitsgeräts in gebogenem Zustand,
- Fig. 10: einen Schnitt entlang der Linie X-X in Fig. 9,
- Fig. 11: einen Schnitt entlang der Linie XI-XI in Fig. 9,
- Fig. 12: einen Schnitt entlang der Linie XII-XII in Fig. 9,
- Fig. 13: eine Explosionsdarstellung des werkzeugseitigen Endes der Antriebswelle,
- Fig. 14: das werkzeugseitige Ende der Antriebswelle in Schnittdarstellung,
- Fig. 15: das motorseitige Ende der Antriebswelle in Schnittdarstellung,
- Fig. 16: einen Schnitt entlang der Linie XVI-XVI in Fig. 14,
- Fig. 17: einen Schnitt entlang der Linie XVII-XVII in Fig. 15,
- Fig. 18: das motorseitige Ende der Antriebswelle in Explosionsdarstellung,
- Fig. 19: eine schematische Seitenansicht des motorseitigen Endes der Antriebswelle.

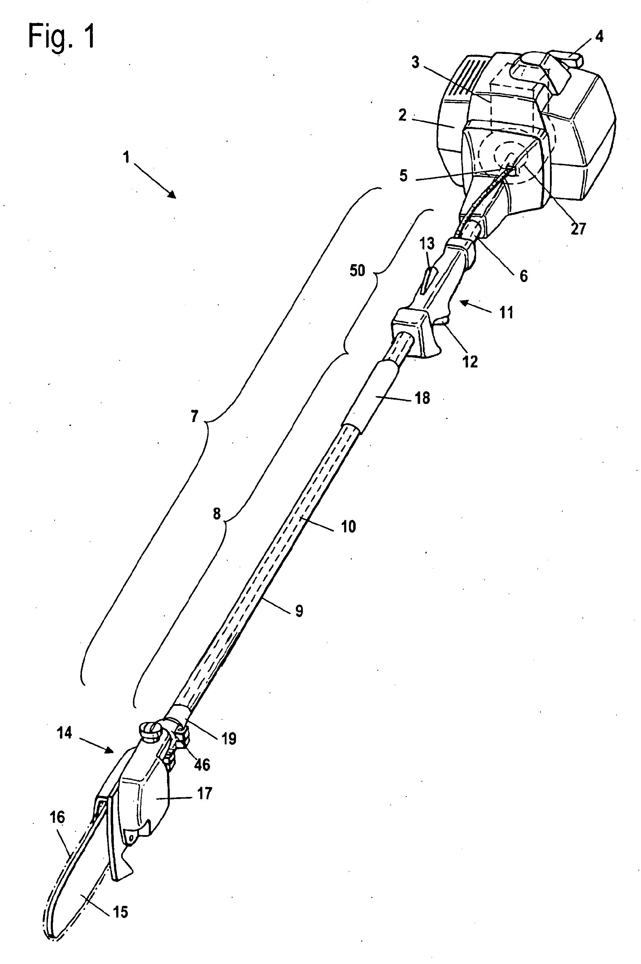

Das in Fig. 1 gezeigte tragbare, handgeführte Arbeitsgerät 1 ist als Hochentaster ausgebildet. Das Arbeitsgerät 1 besitzt ein Gehäuse 2, in dem der in Fig. 1 schematisch gezeigte Antriebsmotor angeordnet ist. Der Antriebsmotor ist als Verbrennungsmotor ausgebildet. Der Antriebsmotor 3 ist insbesondere ein Einzylindermotor, vorteilhaft ein Zweitaktmotor oder ein gemischgeschmierter Viertaktmotor. Aus dem Gehäuse 2 ragt ein Anwerfgriff 4 einer Starteinrichtung zum Starten des Antriebsmotors 3. Der Antriebsmotor 3 treibt eine Antriebswelle 5 rotierend an. Der Antriebsmotor 3 ist über eine Kupplung 27 mit der Antriebswelle 5 gekoppelt.

Am Gehäuse 2 ist ein Schaft 7 festgelegt, der das Gehäuse 2 mit einem Getriebegehäuse 14 verbindet. Der Schaft 7 umfasst ein Führungsrohr 6, das sich vom Gehäuse 2 zum Getriebegehäuse 14 erstreckt, sowie die Antriebswelle 5, die in dem Führungsrohr 6 drehbar gelagert ist. Im Getriebegehäuse 14 ist ein nicht gezeigtes Getriebe angeordnet, über das die Antriebswelle 5 ein Werkzeug, nämlich eine in Fig. 1 schematisch gezeigte, an einer Führungsschiene 15 umlaufende Sägekette 16 antreibt. Zur Schmierung der Sägekette 16 ist am Getriebegehäuse 14 ein Schmiermitteltank 17 festgelegt.

Zum Halten und Führen des Arbeitsgeräts 1 ist am Schaft 7 benachbart zum Gehäuse 2 ein Handgriff 11 festgelegt, an dem ein Gashebel 12 und eine Gashebelsperre 13 gelagert sind. Über den Gashebel 12 ist der Antriebsmotor 3 zu bedienen. Am Handgriff 11 können auch andere oder weitere Bedienelemente vorgesehen sein.

Der Schaft 7 ist mehrteilig ausgebildet und umfasst einen unteren Schaftabschnitt 50, der am Gehäuse 2 festgelegt ist, sowie eine Schaftverlängerung 8, die sich zwischen dem unteren Schaftabschnitt 50 und dem Getriebegehäuse 14 erstreckt. Die Schaftverlängerung 8 stellt ein Schaftsystem dar. Es können auch andere Schaftsysteme vorgesehen sein, die nicht als Verlängerung ausgebildet sind, beispielsweise Schaftsysteme, die den gesamten Schaft bilden. Es können auch mehrere Schaftverlängerungen 8 vorgesehen sein. Die Schaftverlängerung 8 weist eine untere, motorseitige Anschlusseinheit 18 zur Verbindung mit dem unteren Schaftabschnitt 50 sowie eine obere, werkzeugseitige Anschlusseinheit 19 zur Verbindung mit dem Getriebegehäuse 14 auf. Auch die obere Anschlusseinheit 19 kann zur Verbindung mit einem weiteren Führungsrohrabschnitt vorgesehen sein. Zwischen den beiden Anschlusseinheiten 18 und 19 erstreckt sich ein Führungsrohrabschnitt 9, in dem ein Antriebswellenabschnitt 10 drehbar gelagert ist. Das Führungsrohr 6 und die Antriebswelle 5 sind damit über ihre Länge mehrteilig ausgebildet. Der vorgesehene Aufbau des Schafts 7 kann auch für ein Arbeitsgerät vorteilhaft sein, dessen Antriebswelle hin- und hergehend angetrieben ist. Die obere, werkzeugseitige Anschlusseinheit 19 ist mit einer Klemmhülse 46 des Getriebegehäuses 14 verbunden. Der Führungsrohrabschnitt 9 besitzt einen über die gesamte Länge des Führungsrohrabschnitts 9 konstanten Außendurchmesser n. Der Außendurchmesser n entspricht vorteilhaft dem Außendurchmesser des Führungsrohrs 6 im unteren Schaftabschnitt 50.

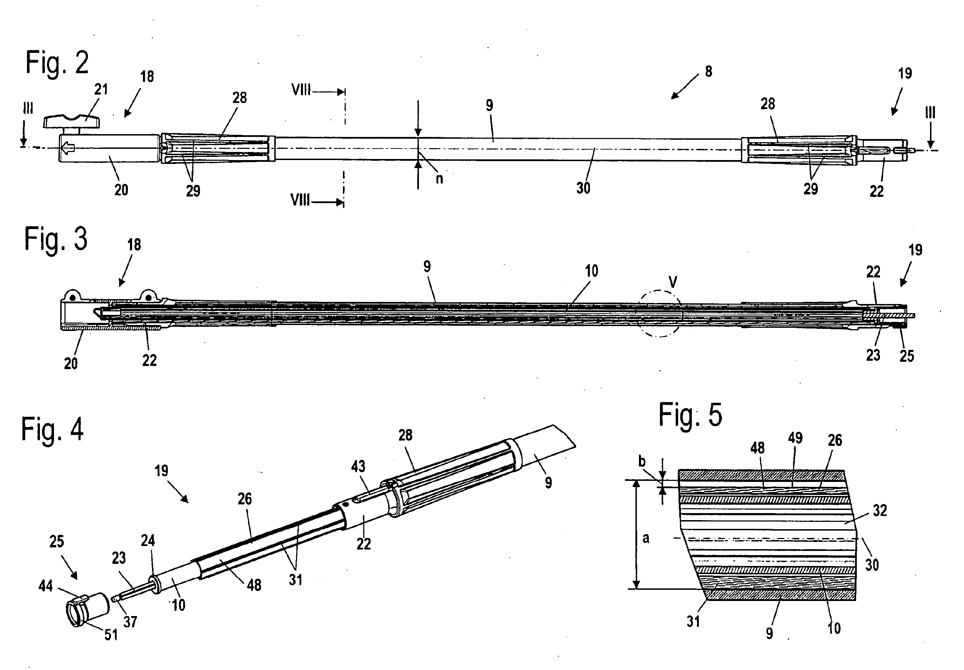

In den Figuren 2 und 3 ist die Schaftverlängerung 8 mit dem Führungsrohrabschnitt 9 gezeigt. Die motorseitige Anschlusseinheit 18 umfasst eine Klemmhülse 20, die mit einer nicht gezeigten Einsteckhülse des unteren Schaftabschnitts 50 oder einer Einsteckhülse 22 der werkzeugseitigen Anschlusseinheit 19 einer weiteren Schaftverlängerung 8 zusammenwirken kann. Zum Fixieren und zum Lösen der Klemmhülse 20 ist eine Spannschraube 21 vorgesehen. Wie Fig. 3 zeigt, ist die Klemmhülse 20 auf einer Einsteckhülse 22 der motorseitigen Anschlusseinheit 18 gehalten. Die Einsteckhülse 22 ist einteilig mit einer Verstärkungshülse 28 ausgeführt, die sich von der Einsteckhülse 22 in Richtung auf die Mitte des Führungsrohrabschnitts 9 erstreckt und den Führungsrohrabschnitt 9 über einen Teilabschnitt seiner Länge an seiner Außenseite umgibt. An der Außenseite der Verstärkungshülse 28 sind radial nach außen und in Längsrichtung des Führungsrohrabschnitts 9 verlaufende Rippen 29 zur Erhöhung der Stabilität vorgesehen. Das die Einsteckhülse 22 und die Verstärkungshülse 28 umfassende Bauteil ist sowohl an der motorseitigen Anschlusseinheit 18 als auch an der werkzeugseitigen Anschlusseinheit 19 angeordnet. Durch die identische Ausbildung kann die Anzahl der benötigten Bauteile verringert werden. Wie Fig. 3 zeigt, ist in die Einsteckhülse 22 der werkzeugseitigen Anschlusseinheit 19 eine Führungshülse 25 eingesteckt. Am werkzeugseitigen Ende der Antriebswelle 10 ist die Antriebswelle 10 mit einer Polygonwelle 23 verbunden. Wie Fig. 4 zeigt, ist die Polygonwelle 23 im Ausführungsbeispiel mit einem quadratischen Querschnitt ausgeführt. An dem nach außen ragenden Ende der Polygonwelle 23 ist ein Zentrierzapfen 37 angeordnet.

Wie Fig. 4 zeigt, besitzt die Führungshülse 25 einen Rand 51, dessen Außenumfang etwa dem Außenumfang der Einsteckhülse 22 entspricht und der an der Einsteckhülse 22 anliegt. Bei der Verbindung mit benachbarten Abschnitten des Führungsrohrs 6 bildet der Rand 51 eine Anlagefläche.

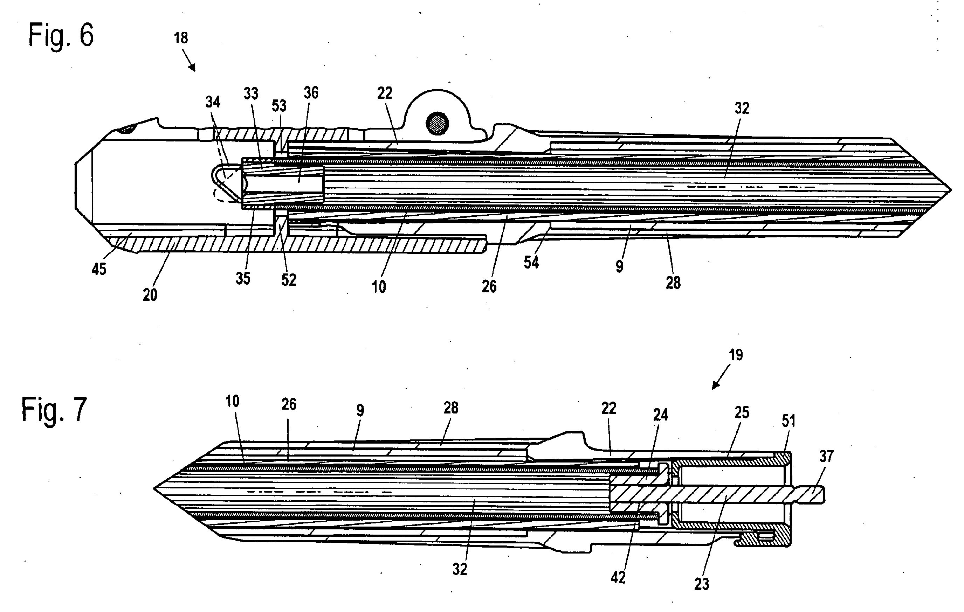

Wie Fig. 4 auch zeigt, besitzt die Führungshülse 25 eine sich in Richtung der in Fig. 2 gezeigten Längsmittelachse 30 der Schaftverlängerung 8 erstreckende Erhöhung 44, die radial nach außen ragt. Auch an der Einsteckhülse 22 ist eine parallel zur Längsmittelachse 30 verlaufende Erhöhung 43 ausgebildet. Die Erhöhungen 43 und 44 kommen bei der Verbindung mit einem angrenzenden Abschnitt des Führungsrohrs 6 in einer Vertiefung 45 der Klemmhülse 20 zu liegen, die in Fig. 6 gezeigt ist.

Wie Fig. 4 zeigt, ist die Polygonwelle 23 in einem werkzeugseitigen Anschlussstück 24 gehalten, das in den Antriebswellenabschnitt 10 eingesetzt ist. Zur Lagerung des Antriebswellenabschnitts 10 in dem Führungsrohrabschnitt 9 ist ein Stützlager 26 vorgesehen, das sich über annähernd die gesamte Länge des Antriebswellenabschnitts 10 erstreckt. Das Stützlager 26, das auch als Liner bezeichnet wird, besitzt einen Grundkörper 48, der im Wesentlichen zylindrisch ausgebildet ist. Aus dem Grundkörper 48 ragen radial nach außen verlaufende Stützelemente 31, die insbesondere als Stege ausgebildet sind. Im Ausführungsbeispiel verlaufen die Stege 31 radial nach außen und parallel zur Längsmittelachse 30 der Schaftverlängerung 8. Es können jedoch auch andere Gestaltungen der Stützelemente 31 vorteilhaft sein.

Zwischen dem Grundkörper 48 des Stützlagers 26 und der Innenwand des Führungsrohrabschnitts 9 ist der in Fig. 5 gezeigte erste Abstand b gebildet. Der erste Abstand b beträgt von etwa 5% bis etwa 15% des Innendurchmessers a des Führungsrohrabschnitts 9. Insbesondere beträgt der erste Abstand b von etwa 5% bis etwa 10% des Innendurchmessers a des Führungsrohrabschnitts 9. Es kann vorteilhaft sein, dass der erste Abstand b weniger als 5% des Innendurchmessers a des Führungsrohrabschnitts 9 beträgt. Gegenüberliegend zu dem Bereich 49 des Stützlagers 26, an dem der erste Abstand b gebildet ist, ist ein Stützelement 31 zur Abstützung an der Innenseite des Führungsrohrabschnitts 9 angeordnet. Der erste Abstand b ist bei mittiger Anordnung von Antriebswellenabschnitt 10, Stützlager 26 und Führungsrohrabschnitt 9 gemessen, also wenn die Längsmittelachsen der einzelnen Elemente mit der Längsmittelachse 30 der Schaftverlängerung 8 zusammenfallen.

In Figuren 6 und 7 sind die motorseitige Anschlusseinheit 18 und die werkzeugseitige Anschlusseinheit 19 vergrößert gezeigt. Wie Fig. 6 zeigt, besitzt die Klemmhülse 20 eine Zwischenwand 52, an der sich die Einsteckhülse 22 und das Stützlager 26 abstützen. Die Zwischenwand 52 besitzt eine mittige Öffnung 53, durch die der Antriebswellenabschnitt 10 ragt. In den Antriebswellenabschnitt 10 ist ein motorseitiges Anschlussstück 33 eingesteckt, das eine mittige Aufnahme 36 für eine Polygonwelle 23 aufweist. Um das Einstecken der Polygonwelle 23 zu erleichtern, sind an dem motorseitigen Anschlussstück 33 zwei Führungsbügel 34 über eine Befestigungshülse 35 festgelegt. Die Führungsbügel 34 drehen das Profil der Polygonwelle 23 beim Einstecken in die richtige Position. Der Führungsrohrabschnitt 9 liegt an einem in der Einsteckhülse 22 gebildeten Absatz 54 an.

An der in Fig. 7 gezeigten werkzeugseitigen Anschlusseinheit 19 ist das werkzeugseitige Anschlussstück 24 vorgesehen, das eine mittige Aufnahme 42 für die Polygonwelle 23 aufweist. Die Aufnahmen 36 und 42 in den Anschlussstücken 24 und 33 weisen ein der Polygonwelle 23 entsprechendes Profil auf, im Ausführungsbeispiel sind die Aufnahmen 36 und 42 also mit quadratischem Querschnitt ausgeführt.

Es ist vorgesehen, dass bei einer mehrteilig ausgebildeten Antriebswelle 5 alle Anschlusseinheiten 18 und 19 entsprechend den in Figuren 6 und 7 gezeigten Anschlusseinheiten 18 und 19 ausgeführt sind. Beim Zusammenstecken der Anschlusseinheiten 18, 19 kommt die Einsteckhülse 22 einer werkzeugseitigen Anschlusseinheit 19 in der Klemmhülse 20 einer motorseitigen Anschlusseinheit 18 zu liegen. Die Polygonwelle 23 ist in dem werkzeugseitigen Anschlussstück 24 festgelegt und wird in das motorseitige Anschlussstück 33 eingesteckt und so weit geschoben, bis der Rand 51 der Führungshülse 25 an der Zwischenwand 52 anliegt. Anschließend wird die Spannschraube 21 angezogen und die Klemmhülse 20 fixiert.

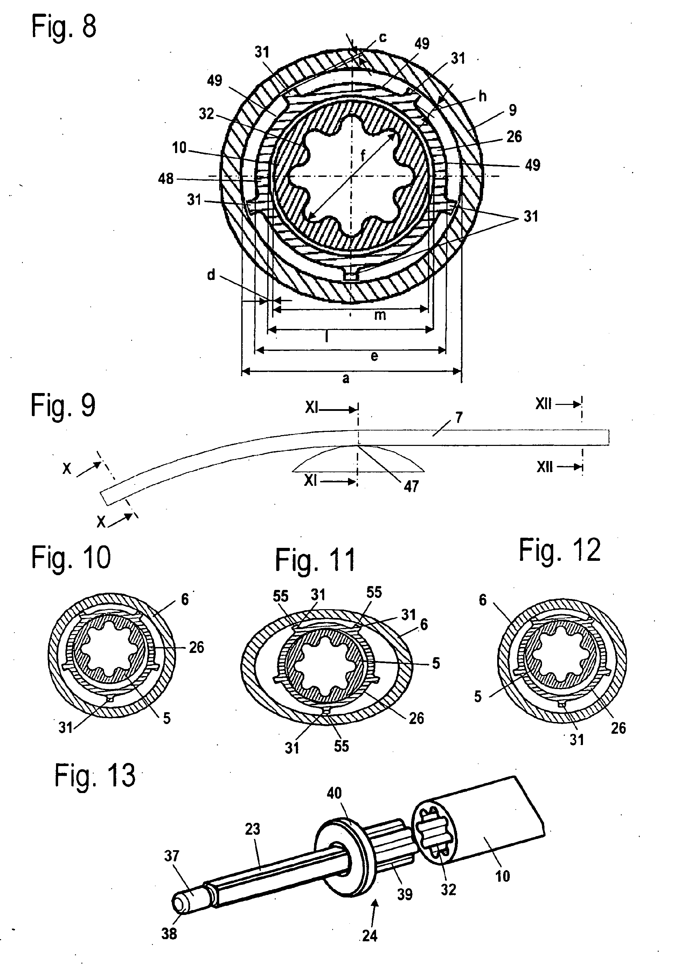

Die Antriebswelle 5 mit dem Antriebswellenabschnitt 10 besteht vorteilhaft aus Metall, insbesondere aus Aluminium. Das Stützlager 26 ist vorteilhaft aus Kunststoff ausgebildet. Um ein geringes Gewicht des Arbeitsgeräts 1 zu erreichen, ist das Führungsrohr 6 zusammen mit dem Führungsrohrabschnitt 9 vollständig aus kohlefaserverstärktem Kunststoff ausgebildet. Um eine hohe Stabilität des Führungsrohrs 6 trotz der vergleichsweise geringen Steifigkeit des kohlefaserverstärkten Kunststoffs zu erreichen, sind die in Fig. 8 gezeigten Abmessungen vorgesehen, die allein und in Kombination miteinander dazu führen, dass das Führungsrohr 6 durch die Antriebswelle 5 und das Stützlager 26 gestützt wird, so dass die Steifigkeit sich insgesamt erhöht.

Die gezeigten Abmessungen können in einem vorgegebenen Abschnitt des Führungsrohrs 6 vorgesehen sein, der besonders belastet ist. Es kann jedoch auch vorgesehen sein, dass alle Abschnitte des Schafts 7, die das Führungsrohr 6, das Stützlager 26 sowie die Antriebswelle 5 aufweisen, entsprechend ausgebildet sind und nur die Bereiche, die zur Verbindung benachbarter Abschnitte von Führungsrohr 6 und Antriebswelle 5 dienen, in abweichender Weise, beispielsweise wie in den Figuren 6 und 7 gezeigt, ausgebildet sind. Vorteilhaft sind alle Abschnitte des Führungsrohrs 6 aus dem gleichen, rohrförmigen Stangenmaterial gebildet, so dass alle Abschnitte die gleichen Außen- und Innendurchmesser sowie die gleiche Wandstärke aufweisen.

Wie der in Fig. 8 gezeigte Querschnitt durch den Führungsrohrabschnitt 9 der Schaftverlängerung 8 zeigt, besitzt das Stützlager 26 insgesamt fünf Stützelemente 31, die radial nach außen ragen und die eine Höhe h besitzen. Die Höhe h ist geringfügig kleiner als die halbe Differenz zwischen dem Innendurchmesser a des Führungsrohrabschnitts 9 und dem Außendurchmesser e des Grundkörpers 48 des Stützlagers 26.

Dadurch ist zwischen den Stützelementen 31 und dem Führungsrohrabschnitt 9 ein zweiter Abstand c gebildet, der von etwa 0,2% bis etwa 2% des Innenumfangs a des Führungsrohrabschnitts 9 beträgt. Vorteilhaft beträgt der zweite Abstand von etwa 0,5% bis etwa 1,5% des Innenumfangs a des Führungsrohrabschnitts 9. Durch diesen sehr geringen zweiten Abstand c ist sichergestellt, dass sich der Führungsabschnitt 9 bereits bei geringer Verformung an den Stützelementen 31 abstützt. Der geringe zweite Abstand c dient dazu, Toleranzen auszugleichen, so dass das Arbeitsgerät 1 bzw. die Schaftverlängerung 8 auf einfache Weise herstellbar sind.

Die fünf Stützelemente 31 sind gleichmäßig am Umfang des Grundkörpers 48 angeordnet. Jeweils zwischen zwei Stützelementen 31 ist ein Bereich 49 gebildet, in dem der Grundkörper 48 zum Innenumfang des Führungsrohrabschnitts 9 den in Fig. 5 gezeigten ersten Abstand b besitzt. Aufgrund der gleichmäßigen Anordnung der fünf Stützelemente 31 ist am Umfang gegenüberliegend zu jedem Bereich 49 ein Stützelement 31 angeordnet. Dadurch wird die Verformung des Führungsrohrs 6 gering gehalten, da sich keine zwei Bereiche 49 diametral gegenüberliegen. Gleichzeitig kann der Außendurchmesser e des Grundkörpers 48 des Stützlagers 26 möglichst gering gehalten werden. Dadurch kann auch der Außendurchmesser m der Antriebswelle 5 bzw. des Antriebswellenabschnitts 10 vergleichsweise gering gehalten werden, so dass sich ein geringes Gewicht des Arbeitsgeräts 1 ergibt. Zwischen dem Außendurchmesser m des Antriebswellenabschnitts 10 und dem Innendurchmesser 1 des Stützlagers 26 ist ein dritter Abschnitt d gebildet, der vorteilhaft etwa 0,5% bis etwa 4% des Innendurchmessers a des Führungsrohrabschnitts 9 beträgt. Vorteilhaft beträgt der dritte Abstand d etwa 1,5% bis etwa 3% des Innendurchmessers a.

Wie Fig. 8 zeigt, weist der Antriebswellenabschnitt 10 ein Innenprofil 32 auf, das wellenförmig ausgebildet ist. Das Innenprofil 32 ist auch in den Figuren 5 bis 7 gezeigt. Das Wellenprofil erlaubt eine einfache drehfeste Verbindung benachbarter Antriebswellenabschnitte 10 und eine einfache drehfeste Verbindung mit dem Getriebe des Arbeitsgeräts 1. Wie Fig. 8 zeigt, besitzt der Antriebswellenabschnitt 10 einen zwischen gegenüberliegenden Wellentälern des Innenprofils 32 gemessenen Innendurchmesser f.

In Fig. 8 ist der Aufbau des Schafts 7 im Bereich der Schaftverlängerung 8 erläutert. Der Schaft 7 kann jedoch in allen Bereichen einen entsprechenden Aufbau aufweisen. Insbesondere ist ein entsprechender Aufbau auch bei einem Schaft 7 vorteilhaft, dessen Führungsrohr und Antriebswelle jeweils einteilig ausgebildet sind und sich vom Gehäuse 2 bis zum Getriebegehäuse 14 erstrecken.

Fig. 9 zeigt schematisch die Biegung des Schafts 7, wenn der Schaft 7 auf ein Auflager 47 auftrifft. Wie Fig. 9 zeigt, biegt sich der Schaft 7 durch. Da das Führungsrohr 6 aus kohlefaserverstärktem Kunststoff besteht, ist keine große Durchbiegung des Führungsrohrs 6 zulässig. Bei zu großer Durchbiegung knickt das Führungsrohr 6 ab und ist damit zerstört. Eine unzulässig große Durchbiegung ist dadurch vermieden, dass sich das Führungsrohr 6 bei Durchbiegung an dem Stützlager 26 und der Antriebswelle 5 abstützt. Dies führt zu einer vergrößerten Steifigkeit.

Die Figuren 10 bis 12 zeigen die Lage der Antriebswelle 5, des Führungsrohrs 6 und des Stützlagers 26 in unterschiedlichen Bereichen des Schafts 7. Wie die Figuren 10 und 12 zeigen, legt sich das Führungsrohr 6 in den äußeren Bereichen des Schafts 7, also den in Figuren 10 und 12 gezeigten Bereichen, die vom Auflager 47 weit entfernt sind, an der Biegeaußenseite des Schafts 7 an das Stützlager 26 an und drückt das Stützlager 26 gegen die Antriebswelle 5. An der gegenüberliegenden Biegeinnenseite des Schafts 7 ist sowohl zwischen der Antriebswelle 5 und dem Stützlager 26 als auch zwischen den Stützelementen 31 des Stützlagers 26 und der Innenseite des Führungsrohrs 6 ein Abstand gebildet.

Wie Fig. 11 zeigt, verformt sich das Führungsrohr 6 im Bereich des Auflagers 47. Das Führungsrohr 6 nimmt eine flache, näherungsweise elliptische Form an und stützt sich an gegenüberliegenden Seiten an Stützelementen 31 des Stützlagers 26 ab. Im Ausführungsbeispiel stützt sich das Führungsrohr 6 an zwei Abstützpunkten 55 an der Biegeaußenseite des Schafts 7 und an einem gegenüberliegenden Abstützpunkt 55 an der Biegeinnenseite des Schafts 7 ab. Auch an der Biegeaußenseite kommt das Führungsrohr 6 nicht zur Anlage an den Grundkörper 48 des Stützlagers. Der Schaft 7 kann jedoch auch so ausgelegt sein, dass das Führungsrohr 6 bei entsprechender Durchbiegung an dem Grundkörper 48 anliegt und sich an diesem abstützt. Auch das Stützlager 26 wird leicht verformt und legt sich an der Biegeaußenseite und Biegeinnenseite an die Antriebswelle 5 an.

Aufgrund der Anlage wird das Führungsrohr 6 an seinem Innenumfang gestützt und kann nicht weiter zusammengedrückt werden.

Die Figuren 13 bis 17 zeigen die Verbindung der Anschlussstücke 24 und 33 mit dem Antriebswellenabschnitt 10. Wie Fig. 13 zeigt, besitzt das Anschlussstück 24 ein Außenprofil 39, das dem Innenprofil 32 des Antriebswellenabschnitts 10 entspricht. Das Anschlussstück 24 besitzt außerdem einen Rand 40, der beim Einschieben des Anschlussstücks 24 an der Stirnseite des Antriebswellenabschnitts 10 zu liegen kommt. Wie Fig. 13 zeigt, besitzt der Zentrierzapfen 37 an seiner nach vorne, also zum benachbarten Anschlussstück 33 ragenden Seite eine Fase 38, die das Einschieben des Zentrierzapfens 37 erleichtert.

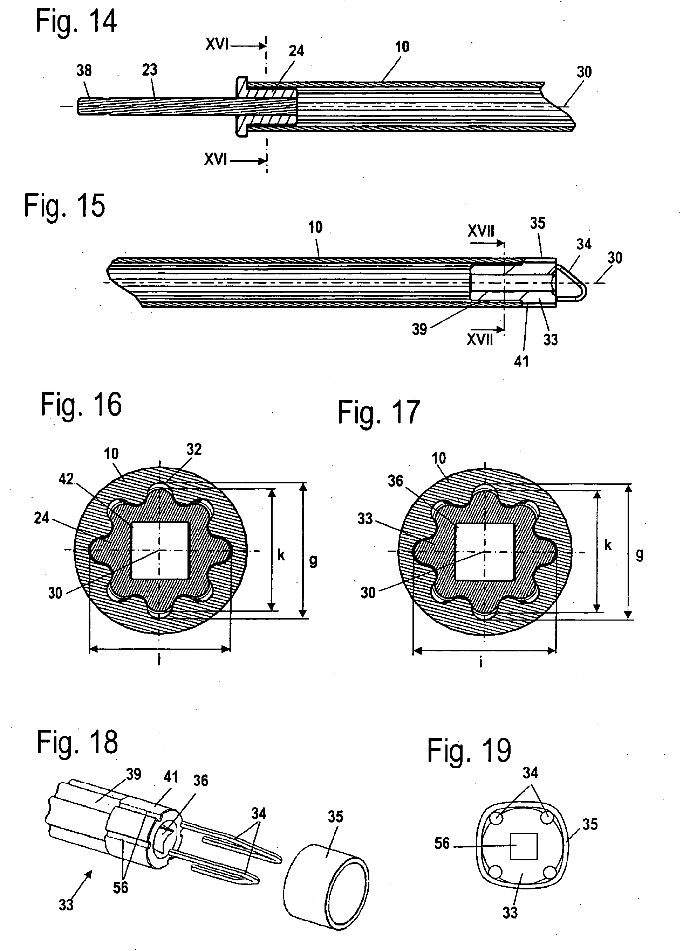

Um eine feste Verbindung zwischen dem Anschlussstück 24 und dem Antriebswellenabschnitt 10 zu erreichen, ist vorgesehen, dass das Außenprofil 39 des Anschlussstücks 24 nicht vollständig mit dem Innenprofil 32 des Antriebswellenabschnitts 10 übereinstimmt. Das Außenprofil 39 des Anschlussstücks 24 besitzt, wie in Fig. 16 gezeigt, einen ersten Durchmesser i, der größer als der in Fig. 8 gezeigte Innendurchmesser f des Antriebswellenabschnitts 10 ist. Der Außendurchmesser i ist dabei zwischen zwei Wellenkämmen gemessen und der Innendurchmesser f zwischen zugehörigen Wellentälern des Antriebswellenabschnitts 10. In einem um 90° um die Längsmittelachse 30 gedrehten Bereich besitzt das Anschlussstück 24 einen zweiten Außendurchmesser k, der kleiner als der zugeordnete Innendurchmesser f des Innenprofils 32 des Antriebswellenabschnitts 10 ist. Beim Einpressen des Anschlussstücks 24 wird der Antriebswellenabschnitt 10 dadurch im Bereich des ersten Außendurchmessers i aufgeweitet. Im Bereich des zweiten Durchmessers k kann sich der Antriebswellenabschnitt 10 verengen, so dass sich ein verringerter Innendurchmesser g in diesem Bereich ergibt. Der Innendurchmesser g ist etwas kleiner als der Innendurchmesser f in einem mittigen Bereich des Antriebswellenabschnitts 10 oder vor dem Einpressen des Anschlussstücks 24.

Das in den Figuren 15 und 17 gezeigte motorseitige Anschlussstück 33 ist entsprechend ausgebildet und besitzt ebenfalls einen ersten, vergrößerten Durchmesser i und einen zweiten, verkleinerten Durchmesser k. Entsprechend wird der Antriebswellenabschnitt 10 auch beim Einpressen des motorseitigen Anschlussstücks 33 im Bereich des ersten Durchmessers i aufgeweitet und kann sich im Bereich des zweiten Durchmessers k abflachen, so dass sich ein verringerter Innendurchmesser g ergibt. Der Antriebswellenabschnitt 10 ist dadurch im Bereich der Anschlussstücke 24 und 33 nicht vollständig rund, sondern besitzt einen leicht ovalen Querschnitt.

Ein guter Pressverband kann auch mit anderen Querschnittsformen erreicht werden. Hierzu müssen das einzupressende Bauteil und das Bauteil, in das eingepresst werden soll, unterschiedliche, geeignet aufeinander angepasste Querschnitte aufweisen. Beispielsweise können ein rohrförmiges Bauteil mit rundem Innendurchmesser und ein einzupressendes Bauteil mit leicht ovalem Außendurchmesser vorgesehen sein. Auch die Verbindung der Führungsbügel 34 mit dem Anschlussstück 33, die in den Figuren 18 und 19 gezeigt ist, kann nach dem gleichen Prinzip erfolgen. Hier ist zur Fixierung eine Befestigungshülse 35 vorgesehen. Die Führungsbügel 34 sind in Nuten 56 des Anschlussstücks 33 angeordnet. Die Nuten 56 sind in einem Rand 41 des Anschlussstücks 33 angeordnet, der, wie Fig. 15 zeigt, bei eingepresstem Anschlussstück 33 an der Stirnseite des Antriebswellenabschnitts 10 anliegt.

Wie Fig. 19 zeigt, werden die Bügel 34 über die Befestigungshülse 35 an dem Anschlussstück 33 fixiert. Das Anschlussstück 33 besitzt in Verbindung mit den Bügeln 34 einen unsymmetrischen Querschnitt. Dadurch wird die Befestigungshülse 35 im Bereich der Führungsbügel 34 aufgeweitet und legt sich in den jeweils zwischen zwei Führungsbügeln 34 liegenden Bereichen an das Anschlussstück 33 an.

Um sicherzustellen, dass die Befestigungshülse 35 bzw. die Enden des Antriebswellenabschnitts 10 aufgeweitet werden, ist vorgesehen, dass die Anschlussstücke 33 und 24 aus einem härteren Material bestehen als der Antriebswellenabschnitt 10 und die Befestigungshülse 35. Die Anschlussstücke 24 und 33 bestehen vorteilhaft aus einem Sintermaterial, während der Antriebswellenabschnitt 10 und die Befestigungshülse 35 insbesondere aus Metall bestehen. Vorteilhaft besteht die Befestigungshülse 35 aus Stahl und die Antriebswelle 5 bzw. der Antriebswellenabschnitt 10 aus Aluminium.

Dadurch, dass der Antriebswellenabschnitt 10 und die Befestigungshülse 35 aufgeweitet werden, können beim Einpressvorgang Toleranzen ausgeglichen werden. Dadurch kann auf einfache Weise ein fester Pressverband sichergestellt werden. Die beschriebene Gestaltung eines Pressverbands stellt einen eigenständigen erfinderischen Gedanken dar und kann auch bei Pressverbänden für andere Anwendungsbereiche eingesetzt werden. Die Anwendung ist dabei nicht auf handgeführte Arbeitsgeräte beschränkt.

Das Führungsrohr 6 und die Antriebswelle 5 besitzen vom Gehäuse 2 bis zum Getriebegehäuse 14 einen konstanten Durchmesser. Bei mehrteiliger Ausbildung des Führungsrohrs 6 und/oder der Antriebswelle 5 sind die einzelnen Abschnitte mit gleichem, konstantem Durchmesser ausgeführt.

Im Ausführungsbeispiel beträgt der Innendurchmesser a des Führungsrohrs 6 bzw. des Führungsrohrabschnitts 9 etwa 21 mm, der erste Abstand b beträgt etwa 3 mm, der zweite Abstand c beträgt etwa 0,4 mm und der dritte Abstand d etwa 1 mm. Der Außendurchmesser n des Führungsrohrs 6 und des Führungsrohrabschnitts 9 beträgt vorteilhaft etwa 25 mm bis 26 mm.

## Patentansprüche

1. Schaftsystem für ein tragbares, handgeführtes Arbeitsgerät, wobei das Schaftsystem eine untere Anschlusseinheit (18) und eine obere Anschlusseinheit (19) zur Verbindung mit angrenzenden Bauteilen aufweist, wobei das Schaftsystem einen Führungsrohrabschnitt (9) und einen in dem Führungsrohrabschnitt (9) angeordneten Antriebswellenabschnitt (10) aufweist, wobei der Antriebswellenabschnitt (10) in dem Führungsrohrabschnitt (9) über mindestens ein Stützlager (26) abgestützt ist, wobei der Führungsrohrabschnitt (9) aus kohlefaserverstärktem Kunststoff besteht und wobei zwischen dem Stützlager (26) und dem Führungsrohrabschnitt (9) in mindestens einem Bereich (49) des Umfangs des Stützlagers (26) ein erster Abstand (b) gebildet ist, der bis etwa 15% des Innendurchmessers (a) des Führungsrohrabschnitts (9) beträgt.

2. Schaftsystem nach Anspruch 1,
**dadurch gekennzeichnet, dass** der erste Abstand (b) bis etwa 10% des Innendurchmessers (a) des Führungsrohrabschnitts (9) beträgt und dass der erste Abstand (b) mindestens etwa 5% des Innendurchmessers (a) des Führungsrohrabschnitts (9) beträgt.

3. Schaftsystem nach Anspruch 1 bis 2,
**dadurch gekennzeichnet, dass** das Stützlager (26) sich an dem Führungsrohrabschnitt (9) über mindestens ein Stützelement (31) abstützt, wobei der Bereich (49), in dem der erste Abstand (b) besteht, insbesondere zwischen zwei Stützelementen (31) des Stützlagers (26) liegt, wobei vorteilhaft mehrere Stützelemente (31) vorgesehen sind, die so am Umfang des Stützlagers (26) angeordnet sind, dass gegenüberliegend zu jedem zwischen zwei Stützelementen (31) liegenden Bereich (49) ein Stützelement (31) angeordnet ist und wobei zwischen einem Stützelement (31) und dem Führungsrohrabschnitt (9) insbesondere ein zweiter Abstand (c) von etwa 0,2% bis etwa 2% des Innenumfangs (a) des Führungsrohrabschnitts (9) gebildet ist.

4. Schaftsystem nach Anspruch 3,
**dadurch gekennzeichnet, dass** das Stützlager (26) einen zylindrischen Grundkörper (48) besitzt, von dessen Außenumfang sich mindestens ein Stützelement (31) nach außen erstreckt, wobei in dem Grundkörper und wobei zwischen dem Außenumfang des Antriebswellenabschnitts (10) und dem Grundkörper (48) des Stützlagers (26) insbesondere ein dritter Abstand (d) gebildet ist, der etwa 0,5% bis etwa 4% des Innendurchmessers (a) des Führungsrohrabschnitts (9) beträgt.

5. Schaftsystem nach einem der Ansprüche 1 bis 4,
**dadurch gekennzeichnet, dass** das Stützlager (26) sich über die gesamte Länge des Führungsrohrabschnitts (9) zwischen der oberen Anschlusseinheit (19) und der unteren Anschlusseinheit (18) erstreckt.

6. Schaftsystem nach einem der Ansprüche 1 bis 5,
**dadurch gekennzeichnet, dass** der Antriebswellenabschnitt (10) an mindestens einem Ende drehfest mit einem Anschlussstück (24, 33) verbunden ist, wobei der Antriebswellenabschnitt (10) insbesondere ein Innenprofil (32) aufweist, das in ein Außenprofil (39) des Anschlussstücks (24, 33) greift und wobei das Anschlussstück (24, 33) in einem in den Antriebswellenabschnitt (10) eingesteckten Bereich vorteilhaft einen ersten Außendurchmesser (i) und einen zweiten Außendurchmesser (k) aufweist, wobei der erste Außendurchmesser (i) größer als ein zugeordneter erster Innendurchmesser (f) des Antriebswellenabschnitts (10) vor dem Einstecken des Anschlussstücks (24, 33) ist und der zweite Außendurchmesser (k) kleiner als ein zugeordneter zweiter Innendurchmesser (f) des Antriebswellenabschnitts (10) vor dem Einstecken des Anschlussstücks (24, 33) ist.

7. Schaftsystem nach einem der Ansprüche 1 bis 6,
**dadurch gekennzeichnet, dass** benachbart zu mindestens einer Anschlusseinheit (18, 19) eine den Führungsrohrabschnitt (9) umgebende Verstärkungshülse (28) angeordnet ist.

8. Schaftsystem nach einem der Ansprüche 1 bis 7,
**dadurch gekennzeichnet, dass** der Führungsrohrabschnitt (9) und der Antriebswellenabschnitt (10) jeweils als einteiliges Rohr ausgebildet sind und sich von der unteren Anschlusseinheit (18) bis zur oberen Anschlusseinheit (19) erstrecken.

9. Tragbares, handgeführtes Arbeitsgerät mit einem Gehäuse (2), in dem ein Antriebsmotor (3) angeordnet ist, und mit mindestens einem von dem Antriebsmotor (3) angetriebenen Werkzeug, wobei das Arbeitsgerät (1) einen Schaft (7) besitzt, an dessen einem Ende das Gehäuse (2) und an dessen gegenüberliegendem Ende das Werkzeug angeordnet ist, wobei der Schaft (7) ein Führungsrohr (6) und eine Antriebswelle (5) umfasst und wobei die Antriebswelle (5) durch das Führungsrohr (6) geführt und in dem Führungsrohr (6) über mindestens ein Stützlager (26) abgestützt ist,
**dadurch gekennzeichnet, dass** mindestens ein Führungsrohrabschnitt (9) aus kohlefaserverstärktem Kunststoff besteht, und dass zwischen dem Stützlager (26) und dem Führungsrohrabschnitt (9) in mindestens einem Bereich (49) des Umfangs des Stützlagers (26) ein erster Abstand (b) gebildet ist, der bis etwa 15% des Innendurchmessers (a) des Führungsrohrabschnitts (9) beträgt.

10. Arbeitsgerät nach Anspruch 9,
**dadurch gekennzeichnet, dass** der erste Abstand (b) bis etwa 10% des Innendurchmessers (a) des Führungsrohrabschnitts (9) beträgt, wobei der erste Abstand (b) vorteilhaft mindestens etwa 5% des Innendurchmessers (a) des Führungsrohrabschnitts (9) beträgt.

11. Arbeitsgerät nach Anspruch 9 oder 10,
**dadurch gekennzeichnet, dass** das Führungsrohr (6) vollständig aus kohlefaserverstärktem Kunststoff besteht.

12. Arbeitsgerät nach einem der Ansprüche 9 bis 11,
**dadurch gekennzeichnet, dass** das Stützlager (26) sich an dem Führungsrohr (6) über mindestens ein Stützelement (31) abstützt, wobei der Bereich (49), in dem der erste Abstand (b) besteht, insbesondere zwischen zwei Stützelementen (31) des Stützlagers (26) liegt und wobei vorteilhaft mehrere Stützelemente (31) vorgesehen sind, die so am Umfang des Stützlagers (26) angeordnet sind, dass gegenüberliegend zu jedem zwischen zwei Stützelementen (31) liegenden Bereich (49) ein Stützelement (31) angeordnet ist.

13. Arbeitsgerät nach Anspruch 12,
**dadurch gekennzeichnet, dass** zwischen dem Stützelement (31) und dem Führungsrohr (6) ein zweiter Abstand (c) von etwa 0,2% bis etwa 2% des Innenumfangs (a) des Führungsrohrs (6) gebildet ist.

14. Arbeitsgerät nach Anspruch 12 oder 13,
**dadurch gekennzeichnet, dass** das Stützlager (26) einen zylindrischen Grundkörper (48) besitzt, von dessen Außenumfang sich mindestens ein Stützelement (31) nach außen erstreckt, wobei in dem Grundkörper (48) die Antriebswelle (5) gelagert ist und wobei vorteilhaft zwischen dem Außenumfang der Antriebswelle (5) und dem Grundkörper (48) des Stützlagers (26) ein dritter Abstand (d) gebildet ist, der etwa 0,5% bis etwa 4% des Innendurchmessers (a) des Führungsrohrs (6) beträgt.

15. Arbeitsgerät nach einem der Ansprüche 9 bis 14,
**dadurch gekennzeichnet, dass** die Antriebswelle (5) mehrteilig ausgebildet ist, und dass zur Verbindung der Antriebswellenabschnitte (10) mindestens ein Anschlussstück (24, 33) vorgesehen ist, das mit einem Antriebswellenabschnitt (10) drehfest verbunden ist, wobei der Antriebswellenabschnitt (10) insbesondere ein Innenprofil (32) aufweist, das in ein Außenprofil (39) des Anschlussstücks (24, 33) greift und wobei das Anschlussstück (24, 33) in einem in den Antriebswellenabschnitt (10) eingesteckten Bereich vorteilhaft einen ersten Außendurchmesser (i) und einen zweiten Außendurchmesser (k) aufweist, wobei der erste Außendurchmesser (i) größer als ein zugeordneter erster Innendurchmesser (f) des Antriebswellenabschnitts (10) vor dem Einstecken des Anschlussstücks (24, 33) ist und der zweite Außendurchmesser (k) kleiner als ein zugeordneter zweiter Innendurchmesser (f) des Antriebswellenabschnitts (10) vor dem Einstecken des Anschlussstücks (24, 33) ist.

16. Arbeitsgerät nach einem der Ansprüche 9 bis 15,
**dadurch gekennzeichnet, dass** das Arbeitsgerät (1) ein Schaftsystem nach einem der Ansprüche 1 bis 8 besitzt.

## Claims

1. Shaft system for a portable, handheld work tool, wherein the shaft system comprises a lower connection unit (18) and an upper connection unit (19) for connection to adjacent components, wherein the shaft system comprises a guide tube section (9) and a drive shaft section (10) arranged in the guide tube section (9), wherein the drive shaft section (10) is supported in the guide tube section (9) by means of at least one support bearing (26), wherein the guide tube section (9) consists of carbon fibre reinforced plastics, and wherein a first clearance (b) is formed between the support bearing (26) and the guide tube section (9) in at least one region (49) of the periphery of the support bearing (26), which clearance is up to approximately 15% of the inner diameter (a) of the guide tube section (9).

2. Shaft system according to claim 1,
**characterised in that** the first clearance (b) is up to approximately 10% of the inner diameter (a) of the guide tube section (9), and that the first clearance (b) is at least approximately 5% of the inner diameter (a) of the guide tube section (9).

3. Shaft system according to claim 1 to 2,
**characterised in that** the support bearing (26) is supported at the guide tube section (9) by means of at least one support element (31), wherein the region (49) in which the first clearance (b) consists, lies especially between two support elements (31) of the support bearing (26), wherein advantageously several support elements (31) are provided, which are arranged on the periphery of the support bearing (26) in such a manner that a support element (31) is arranged opposite to each region (49) lying between two support element (31), and wherein especially a second clearance (c ) of approximately 0,2% to approximately 2% of the inner periphery (a) of the guide tube (6) is formed between the support element (31) and the guide tube (6).

4. Shaft system according to claim 3,
**characterised in that** the support bearing (26) has a cylindrical base body (48), from the outer periphery of which extends at least one support element (31) outwardly, wherein in the base body and wherein especially a third clearance (d) is formed between the outer periphery of the drive shaft section (10) and the base body (48) of the support bearing (26), which clearance is approximately 0,5% to approximately 4% of the inner diameter (a) of the guide tube section (9).

5. Shaft system according to one of claims 1 to 4,
**characterised in that** the support bearing (26) extends over the entire length of the guide tube section (9) between the upper connection unit (19) and the lower connection unit (18).

6. Shaft system according to one of claims 1 to 5,
**characterised in that** the drive shaft section (10) is connected to the connection piece (24, 33) at at least one end in a torque-proof manner, wherein the drive shaft section (10) especially has in inner profile (32), which engages an outer profile (39) of the connection piece (24, 33), and wherein the connection piece (24, 33) advantageously has a first outer diameter (i) and a second outer diameter (k) in a region inserted into the drive shaft section (10), wherein the first outer diameter (i) is larger than an assigned first inner diameter (f) of the drive shaft section (10) prior to inserting the connection piece (24, 33), and the second outer diameter (k) is smaller than an assigned second inner diameter (f) of the drive shaft section (10) prior to inserting the connection piece (24, 33).

7. Shaft system according to one of claims 1 to 6,
**characterised in that** a reinforcing sleeve (28) surrounding the guide tube section (9) is arranged adjacent to at least one connection unit (18, 19).

8. Shaft system according to one of claims 1 to 7,
**characterised in that** guide tube section (9) and the drive shaft section (10) are respectively formed as a one-piece tube and extend from the lower connection unit (18) to the upper connection unit (19).

9. Portable handheld work tool with a housing (2) in which is arranged a drive motor (3), and with at least one tool driven by the drive motor (3), wherein the work tool (1) has a shaft (7), at one end thereof is arranged the housing (2), and at the opposite end thereof is arranged the tool, wherein the shaft (7) comprises a guide tube (6) and a drive shaft (5), and wherein the drive shaft (5) is guided through the guide tube (6) and is supported in the guide tube (6) via at least one support bearing (26),
**characterised in that** at least one guide tube section (9) consists of carbon fibre reinforced plastics, and that a first clearance (b) is formed between the support bearing (26) and the guide tube section (9) in at least one region (49) of the periphery of the support bearing (26), which clearance is up to approximately 15% of the inner diameter (a) of the guide tube section (9).

10. Work tool according to claim 9,
**characterised in that** the first clearance (b) is up to approximately 10% of the inner diameter (a) of the guide tube section (9), wherein the first clearance (b) is advantageously at least approximately 5% of the inner diameter (a) of the guide tube section (9).

11. Work tool according to claim 9 or 10,
**characterised in that** the guide tube (6) completely consists of carbon fibre reinforced plastics.

12. Shaft system according to claim 9 to 11,
**characterised in that** the support bearing (26) is supported at the guide tube (6) via at least one support element (31), wherein the region (49) in which the first clearance (b) is present, lies especially between two support elements (31) of the support bearing (26), and wherein several support elements (31) are advantageously provided, which are arranged on the periphery of the support bearing (26) in such a manner, that a support element (31) is arranged opposite to each region (49) lying between two support elements (31).

13. Work tool according to claim 12,
**characterised in that** a second clearance (c ) of approximately 0,2% to approximately 2% of the inner periphery (a) of the guide tube (6) is formed between the support element (31) and the guide tube (6).

14. Work tool according to claim 12 or 13,
**characterised in that** the support bearing (26) has a cylindrical base body (48), from whose outer periphery extends at least one support element (31) outwardly, wherein the drive shaft (5) is mounted in the base body (48), and wherein a third clearance (d) is advantageously formed between the outer periphery of the drive shaft (5) and the base body (48) of the support bearing (26), which clearance is approximately 0,5% to approximately 4% of the inner diameter (a) of the guide tube (6).

15. Work tool according to one of claims 9 to 14,
**characterised in that** the drive shaft (5) is formed in several parts, and that at least one connection piece (24, 33) is provided for the connection of the drive shaft sections (10), which piece is connected to a drive shaft section (10) in a torque-proof manner, wherein the drive shaft section (10) especially comprises an inner profile (32) which engages an outer profile (39) of the connection piece (24, 33), and wherein the connection piece (24, 33) advantageously comprises a first outer diameter (i) and a second outer diameter (k) in a region inserted into the drive shaft section (10), wherein the first outer diameter (i) is larger than an assigned first inner diameter (f) of the drive shaft section (10) prior to inserting the connection piece (24, 33), and the second outer diameter (k) is smaller than an assigned second inner diameter (f) of the drive shaft section (10) prior to inserting the connection piece (24, 33).

16. Work tool according to one of claims 9 to 15,
**characterised in that** the work tool (1) has a shaft system according to one of claims 1 to 8.

## Revendications

1. Système d'axe pour une machine portative guidée à la main, étant précisé que le système d'axe présente une unité de raccordement inférieure (18) et une unité de raccordement supérieure (19) à relier à des éléments adjacents, que le système d'axe présente une partie tubulaire de guidage (9) et une partie à arbre d'entraînement (10) disposée dans celle-ci, que la partie à arbre d'entraînement (10) est en appui dans la partie tubulaire de guidage (9) par l'intermédiaire d'au moins un support (26), que la partie tubulaire de guidage (9) se compose de matière plastique renforcée par des fibres de carbone, et qu'il est prévu, entre le support (26) et la partie tubulaire de guidage (9), dans au moins une zone (49) de la circonférence du support (26), un premier écartement (b) qui représente jusqu'à environ 15% du diamètre intérieur (a) de la partie tubulaire de guidage (9).

2. Système d'axe selon la revendication 1,
**caractérisé en ce que** le premier écartement (b) représente jusqu'à environ 10% du diamètre intérieur (a) de la partie tubulaire de guidage (9) et **en ce que** le premier écartement (b) représente au moins environ 5% du diamètre intérieur (a) de la partie tubulaire de guidage (9).

3. Système d'axe selon les revendications 1 à 2,
**caractérisé en ce que** le support (26) s'appuie contre la partie tubulaire de guidage (9) par l'intermédiaire d'au moins un élément d'appui (31), étant précisé que la zone (49) dans laquelle il y a l'écartement (b) est située en particulier entre deux éléments d'appui (31) du support (26), qu'il est prévu avantageusement plusieurs éléments d'appui (31) qui sont disposés sur la circonférence du support (26) de telle sorte qu'un élément d'appui (31) est disposé à l'opposé de chaque zone (49) située entre deux éléments d'appui (31), et qu'il est prévu entre un élément d'appui (31) et la partie tubulaire de guidage (9) en particulier un deuxième écartement (c) qui représente environ 0,2% à environ 2% du diamètre intérieur (a) de ladite partie tubulaire de guidage (9).

4. Système d'axe selon la revendication 3,
**caractérisé en ce que** le support (26) a un corps de base cylindrique (48) à partir de la circonférence extérieure duquel au moins un élément d'appui (31) s'étend vers l'extérieur, étant précisé que dans le corps de base et qu'il est prévu entre la circonférence extérieure de la partie à arbre d'entraînement (10) et le corps de base (48) du support (26) en particulier un troisième écartement (d) qui représente environ 0,5% à environ 4% du diamètre intérieur (a) de la partie tubulaire de guidage (9).

5. Système d'axe selon l'une des revendications 1 à 4,
**caractérisé en ce que** le support (26) s'étend sur toute la longueur de la partie tubulaire de guidage (9) entre l'unité de raccordement supérieure (19) et l'unité de raccordement inférieure (18).

6. Système d'axe selon l'une des revendications 1 à 5,
**caractérisé en ce que** la partie à arbre d'entraînement (10) est reliée solidaire en rotation, au niveau d'au moins une extrémité, à un raccord (24, 33), étant précisé que la partie à arbre d'entraînement (10) présente en particulier un profil intérieur (32) qui entre dans un profil extérieur (39) du raccord (24, 33), que le raccord (24, 33), dans une zone introduite dans la partie à arbre d'entraînement (10), présente avantageusement un premier diamètre extérieur (i) et un second diamètre extérieur (k), et que le premier diamètre extérieur (i) est plus grand qu'un premier diamètre intérieur associé (f) de la partie à arbre d'entraînement (10) avant l'introduction du raccord (24, 33), tandis que le second diamètre extérieur (k) est plus petit qu'un second diamètre intérieur associé (f) de la partie à arbre d'entraînement (10) avant l'introduction du raccord (24, 33).

7. Système d'axe selon l'une des revendications 1 à 6,
**caractérisé en ce qu'**il prévu près d'au moins une unité de raccordement (18, 19) un manchon de renforcement (28) qui entoure la partie tubulaire de guidage (9).

8. Système d'axe selon l'une des revendications 1 à 7,
**caractérisé en ce que** la partie tubulaire de guidage (9) et la partie à arbre d'entraînement (10) sont conçues chacune comme un tube d'une seule pièce et s'étendent de l'unité de raccordement inférieure (18) à l'unité de raccordement supérieure (19).

9. Machine portative guidée à la main, avec un carter (2) dans lequel est disposé un moteur d'entraînement (3), et avec au moins un outil entraîné par le moteur d'entraînement (3), la machine (1) comportant un axe (7) à une extrémité duquel est disposé le carter (2) et à l'extrémité opposée duquel est disposé l'outil, l'axe (7) comprenant un tube de guidage (6) et un arbre d'entraînement (5), et l'arbre d'entraînement (5) traversant le tube de guidage (6) et étant en appui dans celui-ci par l'intermédiaire d'au moins un support (26),
**caractérisée en ce qu'**au moins une partie tubulaire de guidage (9) se compose de matière plastique renforcée par des fibres et **en ce qu'**il est prévu, entre le support (26) et la partie tubulaire de guidage (9), dans au moins une zone (49) de la circonférence du support (26), un premier écartement (b) qui représente jusqu'à environ 15% du diamètre intérieur (a) de la partie tubulaire de guidage (9).

10. Machine selon la revendication 9,
**caractérisée en ce que** le premier écartement (b) représente jusqu'à environ 10% du diamètre intérieur (a) de la partie tubulaire de guidage (9), le premier écartement (b) représentant avantageusement au moins environ 5% du diamètre intérieur (a) de la partie tubulaire de guidage (9).

11. Machine selon la revendication 9 ou 10,
**caractérisée en ce que** le tube de guidage (6) se compose entièrement de matière plastique renforcée par des fibres de carbone.

12. Machine selon l'une des revendications 9 à 11,
**caractérisée en ce que** le support (26) s'appuie contre le tube de guidage (6) par l'intermédiaire d'au moins un élément d'appui (31), étant précisé que la zone (49) dans laquelle il y a le premier écartement (b) est située en particulier entre deux éléments d'appui (31) du support (26), et qu'il est prévu avantageusement plusieurs éléments d'appui (31) qui sont disposés sur la circonférence du support (26) de telle sorte qu'un élément d'appui (31) est disposé à l'opposé de chaque zone (49) située entre deux éléments d'appui (31).

13. Machine selon la revendication 12,
**caractérisée en ce qu'**il est prévu entre l'élément d'appui (31) et le tube de guidage (6) un deuxième écartement (c) qui représente environ 0,2% à environ 2% du diamètre intérieur (a) du tube de guidage (6).

14. Machine selon la revendication 12 ou 13,
**caractérisée en ce que** le support (26) comporte un corps de base cylindrique (48) à partir de la circonférence extérieure duquel au moins un élément d'appui (31) s'étend vers l'extérieur, étant précisé que l'arbre d'entraînement (5) est monté dans le corps de base (48) et qu'il est prévu entre la circonférence extérieure de l'arbre d'entraînement (5) et le corps de base (48) du support (26) un troisième écartement (d) qui représente environ 0,5% à environ 4% du diamètre intérieur (a) du tube de guidage (6).

15. Machine selon l'une des revendications 9 à 14,
**caractérisée en ce que** l'arbre d'entraînement (5) est en plusieurs parties et qu'il est prévu pour relier les parties à arbre d'entraînement (10) au moins un raccord (24, 33) qui est relié fixe en rotation à une partie à arbre d'entraînement (10), étant précisé que la partie à arbre d'entraînement (10) présente en particulier un profil intérieur (32) qui entre dans un profil extérieur (39) du raccord (24, 33), que le raccord (24, 33) présente avantageusement, dans une zone introduite dans la partie à arbre d'entraînement (10), un premier diamètre extérieur (i) et un second diamètre extérieur (k), et que le premier diamètre extérieur (i) est plus grand qu'un premier diamètre intérieur associé (f) de la partie à arbre d'entraînement (10) avant l'introduction du raccord (24, 33), tandis que le second diamètre extérieur (k) est plus petit qu'un second diamètre intérieur associé (f) de la partie à arbre d'entraînement (10) avant l'introduction du raccord (24, 33).

16. Machine selon l'une des revendications 9 à 15,
**caractérisée en ce que** la machine (1) a un système d'axe selon l'une des revendications 1 à 8.
